# FASCICULE DE BREVET EUROPEEN

(11) **EP 4 042 078 B1**
(45) Date de publication et mention de la délivrance du brevet: **27.08.2025**
(21) Numéro de dépôt: 20792749.2
(22) Date de dépôt: 07.10.2020
(51) Int. Cl.: F25B 49/00, F25B 49/04, F25B 15/06

(54) **MACHINE DE REFROIDISSEMENT PAR ABSORPTION**
ABSORPTIONSKÜHLMASCHINE
ABSORPTION COOLING MACHINE

(30) Priorité: 09.10.2019 CH 12912019
(43) Date de publication de la demande: 17.08.2022
(73) Titulaire: Ecoclim SA, 1950 Sion (CH)
(72) Inventeur: BRUZZO, Vitale, 35100 Padoue (IT)
(74) Mandataire: Gsmart
(86) Numéro de dépôt international: PCT/IB2020/059408
(87) Numéro de publication internationale: WO 2021/070074

(56) Documents cités:
- DE-A1- 2 158 617
- FR-A- 1 298 366

## Description

La présente invention concerne une machine de refroidissement par absorption comportant des moyens pour réduire la consommation énergétique et augmenter le rendement.

Les machines à absorption sont des systèmes de refroidissement thermiques très répandus.

Les machines à absorption fonctionnent grâce à la faculté de certains liquides d'absorber et de désorber une vapeur. Le mélange de ces deux corps se nomme mélange binaire. En les mettant l'un à côté de l'autre, celui qui évapore se refroidit celui qui absorbe se réchauffe. C'est l'effet exothermique. Le constituant qui absorbe est nommé absorbant, tandis que le constituant qui désorbe, très volatil, est le fluide frigorigène ou l'évaporant.

Deux couples sont principalement utilisés même si d'autres solutions existent bien qu'elles soient trop couteuses, trop compliquées ou trop polluantes. La première est la solution eau et ammoniac (NH3), où l'eau est l'absorbant et l'ammoniaque est l'évaporant. Cette solution permet de refroidir jusqu'à -24° Celsius avec une chauffe de 160° Celsius et des pressions allant jusqu'à 20 atmosphères. La seconde solution est le mélange eau et Bromure de Lithium (H20-LiBr), l'eau étant l'évaporant et le bromure de lithium l'absorbant. Avec cette dernière il est possible de refroidir jusqu'à 1° Celsius avec une chauffe (dans les machines actuellement en fonction) de 90°Celsius, à des pressions entre 6 mb et 85 mb (le vide).

Cette solution est basée sur le point triple de l'eau ; à environ 6mb l'eau est solide, liquide, gazeuse (vapeur) et à une température de 0° Celsius. En d'autres termes, à 6mb de pression l'eau bout à 0° Celsius.

Il suffit donc de maintenir l'eau à 6 mb pour qu'elle reste à 0°. La pression dans laquelle nous vivons est moyennement de 1010mb. Il faut donc travailler dans le vide. Des chercheurs comme William Cullen en 1755, Gerald Nairme en 1777, John Leslie en 1810, les français Edmond et Ferdinand Carré en 1859 y sont arrivés ce qui a aujourd'hui pour effet de démocratiser le principe du froid par absorption.

La demande de brevet publiée par l'Institut National de la Propriété Intellectuelle sous le numéro FR1298366A décrit un système de réfrigération par absorption comportant un générateur, un condenseur, un absorbeur et un évaporateur de réfrigérant. Le générateur peut chauffer la solution diluée qu'il contient pour produire des vapeurs de réfrigérant et une solution concentrée. Les vapeurs de réfrigérant produites dans le générateur passent dans le condenseur. Les condensats formés dans le condenseur passent dans l'évaporateur où ils sont refroidis par détente, les vapeurs résultant de cette détente dans l'évaporateur passant dans ledit absorbeur pour y être absorbées. Le système de réfrigération par absorption comporte de surcroit un évaporateur de solution communiquant avec le générateur et en recevant la solution concentrée et un second absorbeur dans lequel règne une pression intermédiaire entre celles du générateur et du premier absorbeur. La pression dans l'évaporateur de solution est sensiblement égale à la pression dans le second absorbeur, la solution de l'évaporateur de solution y étant refroidie par détente dès son entrée, la vapeur résultant de cette détente passant dans le second absorbeur pour y être absorbée par la solution qu'il contient, ce second absorbeur étant en communication avec le premier absorbeur pour recevoir la solution qu'il contient et avec le générateur pour l'alimenter en solution. Selon les liquides qui sont choisies comme absorbant et comme réfrigérant, il est possible que des cristaux se forme dans la solution absorbante, ce qui peut entraîner une panne. Il est donc nécessaire d'augmenter la fiabilité des machines de refroidissement par absorption.

EP1210556 décrit un système de production de froid par absorption comprenant un générateur, un condenseur, un évaporateur, une valve d'expansion et un absorbeur et un ensemble de stockage de liquide réfrigérant sous pression composé d'au moins un réservoir, d'une vanne en amont dudit réservoir et d'une vanne en aval dudit réservoir. La vanne amont est passante dès lors que la pression à la sortie du condensateur est plus grande ou égale à la pression dans le réservoir et que la vanne aval est bloquée dès que le générateur cesse de produire de la vapeur.

D'ailleurs la demanderesse, a perfectionné le système par absorption au point d'arriver aujourd'hui à faire du froid avec l'énergie solaire voire même l'eau chaude d'une automobile, c'est-à-dire avec de l'énergie gratuite.

Le but de la présente invention est donc de proposer un système de refroidissement à absorption qui a l'avantage de fournir des rendements bien supérieurs aux systèmes conventionnels et dont la construction est simplifiée.

Grâce à la machine de la présente invention, il est possible de produire un froid intense, même à plein régime, avec de l'eau chauffée entre 60° Celsius et 75° Celsius contrairement aux machines du marché qui elles fonctionnent à 90° Celsius.

Conformément à l'invention, une machine de refroidissement par absorption comporte un ensemble désorbeur / condenseur comportant un désorbeur de fluide réfrigérant et de fluide absorbant par séparation d'un flux mixte, un condenseur de fluide réfrigérant raccordé au désorbeur. La machine comporte un ensemble évaporateur/absorbeur, l'absorbeur de fluide réfrigérant étant agencé pour absorber le fluide réfrigérant évaporé provenant de l'évaporateur, l'absorbeur étant raccordé au condenseur par une conduite d'alimentation en fluide absorbant et par une conduite d'évacuation de fluide mixte. La machine comporte en outre une première pompe agencée pour récupérer une solution de l'absorbeur et la faire passer dans un premier échangeur où la solution se refroidit avant d'être dirigée vers des grilles de l'absorbeur, une deuxième pompe agencée pour récupérer le fluide réfrigérant de l'évaporateur et le faire passer dans un deuxième échangeur où il réfrigère le fluide réfrigérant, avant de le diriger vers des grilles de l'évaporateur, et une troisième pompe agencée pour récupérer une solution appauvrie de l'absorbeur et la faire passer dans un troisième échangeur dans lequel la solution pauvre se réchauffe avant d'être dirigée vers un quatrième échangeur où la solution pauvre continue de se réchauffer avant d'être dirigée vers le désorbeur. La machine comporte également une carte électronique agencée pour contrôler l'ampérage des pompes et couper la chauffe si l'ampérage atteint un seuil critique, typiquement 1,8A. Le premier échangeur est agencé entre la première pompe et les grilles de l'absorbeur et configuré de sorte à former un siphon pour le fluide absorbant, empêchant ainsi le passage de l'air, la machine ne comportant aucune électrovanne.

Les caractéristiques de l'invention apparaîtront plus clairement à la lecture d'une description d'une forme d'exécution donnée uniquement à titre d'exemple, nullement limitative en se référant aux figures schématiques, dans lesquelles :
- La Figure 1 représente une machine à absorption dont le capot de protection a été retiré ;
- La Figure 2A représente une vue en perspective en transparence partielle de l'ensemble désorbeur/condenseur de la machine de la figure 1 ;
- La figure 2B représente une vue en perspective de deux plaques de l'ensemble désorbeur/condenseur de la figure 2A ;
- La figure 2C représente une vue partielle d'une plaque anti-éclaboussures de l'ensemble désorbeur/condenseur de la figure 2A ;
- La figure 2D représente une vue en transparence partielle d'un condenseur de l'ensemble désorbeur/condenseur de la figure 2A ;
- La Figure 3A représente une vue en perspective de l'ensemble évaporateur/absorbeur de la Figure 1 ;
- La figure 3B représente une vue de côté d'une grille de l'ensemble évaporateur/absorbeur de la figure 3A ;
- La figure 3C représente une vue en perspective d'un canal de réception de liquide des grilles de l'ensemble évaporateur/absorbeur de la figure 3A ; et
- Les figures 4 et 5 représentent une vue schématique de l'arrière de la machine selon la présente invention.

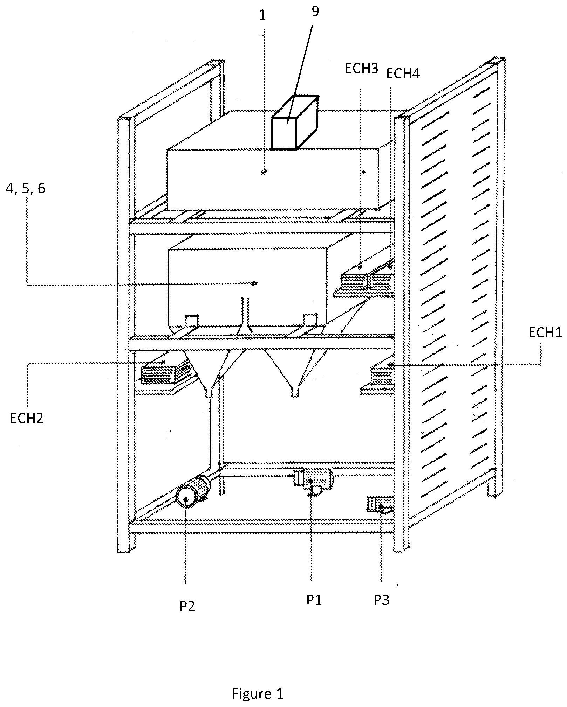

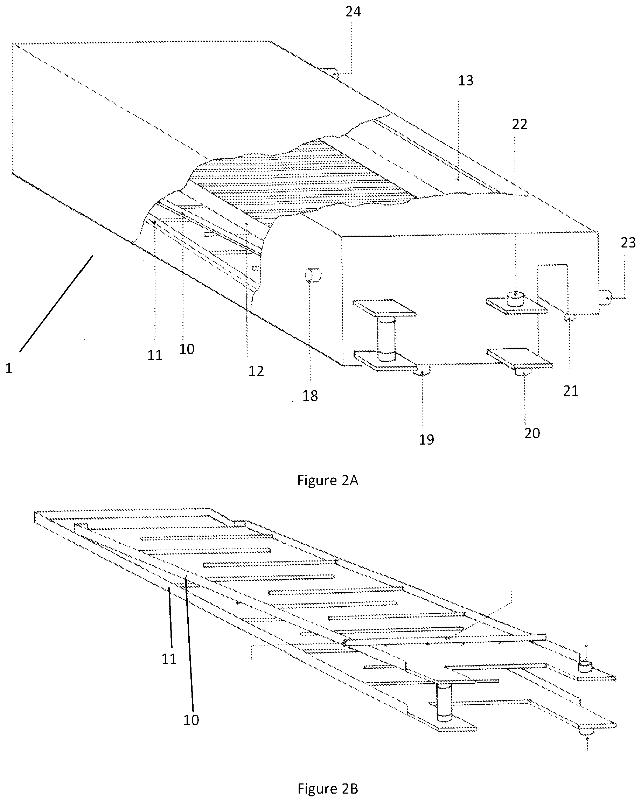

Selon le mode d'exécution préférentiel de l'invention tel qu'illustré à la Figure 1, la machine de refroidissement à absorption utilise un fluide mixte composé de bromure de lithium qui joue le rôle d'absorbant et d'eau qui joue le rôle de fluide réfrigérant. La machine de refroidissement par absorption comporte un ensemble désorbeur / condenseur 1 comportant un désorbeur 2 (figure 2A) de fluide réfrigérant et de fluide absorbant par séparation d'un flux mixte et un condenseur 3 (figure 2A) de fluide réfrigérant raccordé au désorbeur 2. La machine comporte un ensemble évaporateur/absorbeur 4, l'absorbeur 5 de fluide réfrigérant étant agencé pour absorber le fluide réfrigérant évaporé provenant de l'évaporateur 6, l'absorbeur étant raccordé au condenseur par une conduite d'alimentation en fluide absorbant et par une conduite d'évacuation de fluide mixte.

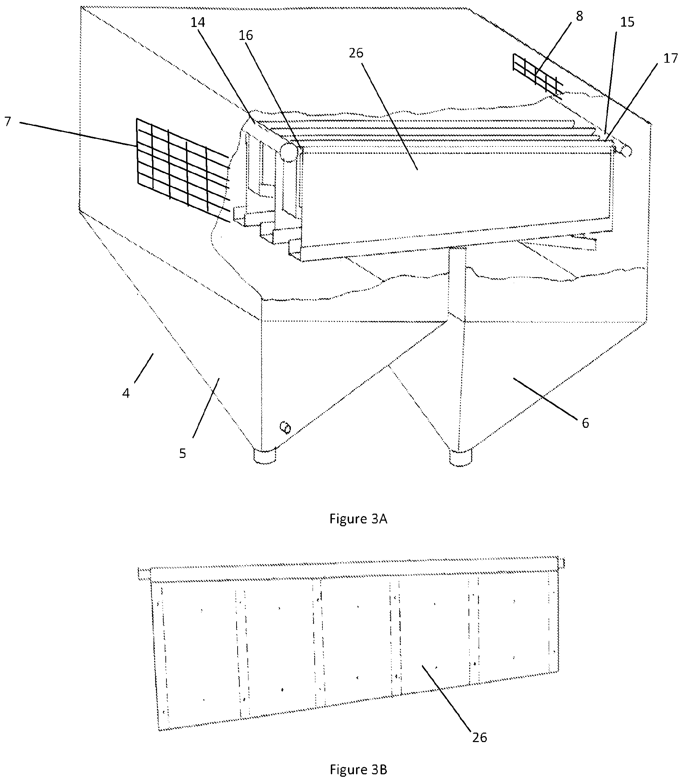

La machine comporte une première pompe P1 agencée pour récupérer une solution de l'absorbeur 5 et la faire passer dans un premier échangeur ECH1 où la solution se refroidit avant d'être dirigée vers des grilles 7 (voir figure 3A) de l'absorbeur 5. C'est la pompe P1 qui est à entrainement magnétique et qui déclenche l'alarme vers une carte électronique dans le cas d'une solution trop riche. Le débit de cette pompe P1 est environ égal à 1500L/H.

Une deuxième pompe P2 est agencée pour récupérer l'eau réfrigérée de l'évaporateur 6 et la faire passer dans un deuxième échangeur ECH2 où elle réfrigère le liquide de la climatisation, avant de diriger cette eau refroidie vers des grilles 8 (voir figure 3A) de l'évaporateur. Le débit de cette pompe P2 est environ égal à 1500L/H.

Une troisième pompe P3 est agencée pour récupérer une solution appauvrie de l'absorbeur 5 et la faire passer dans un troisième échangeur ECH3 dans lequel la solution pauvre se réchauffe avant d'être dirigée vers un quatrième échangeur ECH4 où la solution pauvre continue de se réchauffer avant d'être dirigée vers le désorbeur 2.

Une carte électronique 9 (voir figure 1) est agencée pour contrôler l'ampérage des pompes P1, P2, P3 et couper la chauffe si l'ampérage atteint un seuil critique, typiquement 1,8A. A la valeur seuil 1.8A, la carte électronique déclenche l'arrêt de la chauffe et coupe la pompe. On évite ainsi la cristallisation du Bromure de Lithium.

Le premier échangeur ECH1 est agencé entre la première pompe P1 et les grilles 7 de l'absorbeur 5 et configuré de sorte à former un siphon pour le fluide absorbant, empêchant ainsi le passage de l'air, la machine ne comportant aucune électrovanne. Le siphon est agencé de manière à éviter les vannes de contrôle. Du bromure de lithium saturé d'eau est envoyé dans l'ensemble désorbeur/condenseur. L'eau en plus évapore dans le condenseur et redescend dans l'évaporateur. Le bromure de lithium qui a évaporé l'eau en supplément redescend dans l'absorbeur. La pression est de 85 mbar dans l'ensemble désorbeur/condenseur et 10 mbar dans l'évaporateur/absorbeur. Le risque est que, sans contrôle, l'eau vienne mais que vienne aussi la vapeur. Le siphon est créé à cet effet. La différence de pression de 75mbar impose de créer un siphon de 75 cm de long. Par exemple, avec une différence de pression de 60mbar, une longueur de siphon de 60cm serait suffisante. La longueur de siphon est donc proportionnelle à la différence de pression entre le désorbeur/condenseur et l'évaporateur/absorbeur. Grâce à ce dispositif, il est possible de garder le contrôle de l'eau qui redescend du condenseur.

Les première, deuxième et troisième pompe P1, P2, P3 sont des pompes à entrainement magnétique et dont la troisième pompe P3 est une pompe à entrainement magnétique à engrenage.

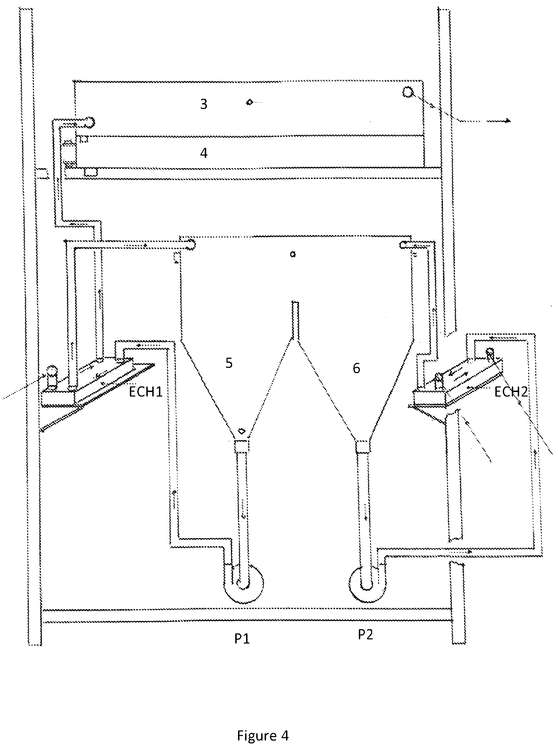

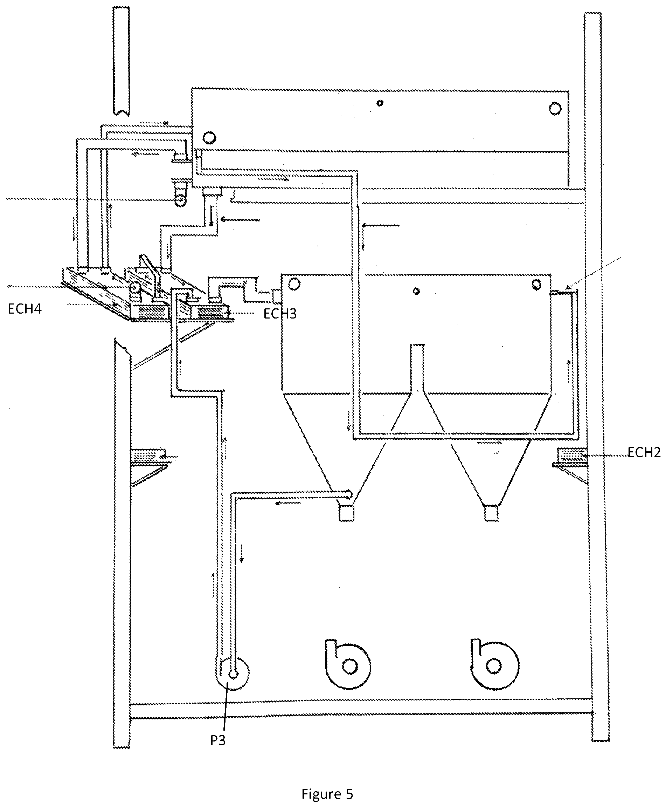

Comme illustré aux figures 4 et 5, la troisième pompe à entrainement magnétique P3 est une pompe à engrenages. Elle assure un débit de 200L/H dans le vide mais reste de 200L/H à 10atm ce qui garantit une grande régularité de débit, recommandé dans le cadre de la présente invention. La troisième pompe à entrainement magnétique P3 reçoit la solution appauvrie de l'absorbeur, la dirige vers le troisième échangeur ECH3 dans lequel elle croise la solution riche qui descend du désorbeur à une température élevée. Ainsi, la solution pauvre se réchauffe et la solution riche se refroidit. A la sortie du troisième échangeur ECH3, la solution pauvre se dirige vers le quatrième échangeur ECH4 où elle croise l'eau de chauffe qui sort du désorbeur. Elle se réchauffe ultérieurement et arrive dans le désorbeur prêt à désorber.

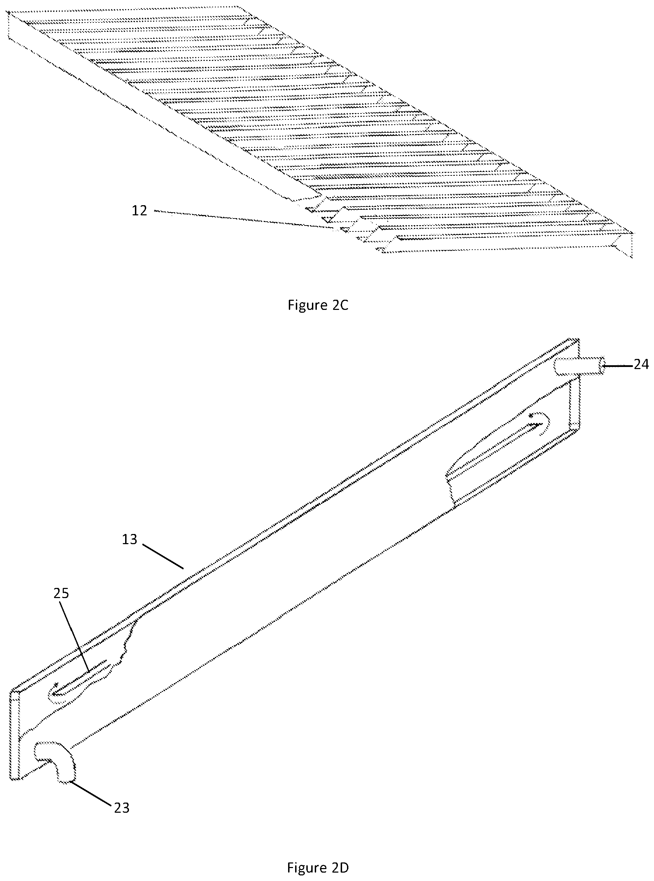

Comme illustré aux figures 2A et 2B, l'ensemble désorbeur/condenseur 1 comporte deux plaques de désorption 10, 11 superposées et inclinées l'une par rapport à l'autre, typiquement environ 4% de pente, la superficie d'écoulement des deux plaques 10, 11 étant légèrement supérieure à la superficie d'un raccord d'entrée 20 des plaques 10, 11, une plaque antiéclaboussures 12 (voir figure 2C) comportant des lamelles plates et parallèles les unes par rapport aux autres, les lamelles étant fixées entre elles par de longues lames agencées de part et d'autre de chaque lamelle de manière à laisser passer la vapeur mais arrêter les gouttelettes de la solution absorbante.

Comme illustré à la figure 2D, l'ensemble désorbeur/condenseur 1 comporte une plaque de condensation verticale 13 dont une entrée 23 d'eau de refroidissement est positionnée plus bas qu'une sortie 24 d'eau de refroidissement, la superficie d'écoulement des canaux internes du condenseur étant légèrement supérieure à la superficie d'un raccord d'entrée. Le condenseur comporte des petites plaques 25 de séparation servant à orienter le sens du flux.

Comme illustré à la figure 3A, l'ensemble évaporateur/absorbeur 4 est raccordé à un circuit de circulation d'un mélange binaire comportant un premier fluide frigorigène et un second fluide absorbant, le fluide frigorigène étant évaporé dans une partie évaporateur de l'ensemble évaporateur/absorbeur 4 puis absorbé dans une partie absorbeur de l'ensemble évaporateur/absorbeur 4 par le mélange riche en fluide absorbant. L'ensemble évaporateur/absorbeur 4 comprend deux tubes distributeurs 14, 15 en vis à vis formant des organes d'évaporateur 6 et d'absorbeur 5, des diffuseurs du fluide frigorigène 16 et des diffuseurs du mélange riche en fluide absorbant 17, chaque diffuseur du fluide frigorigène étant disposé en alternance avec un diffuseur du mélange riche en fluide absorbant.

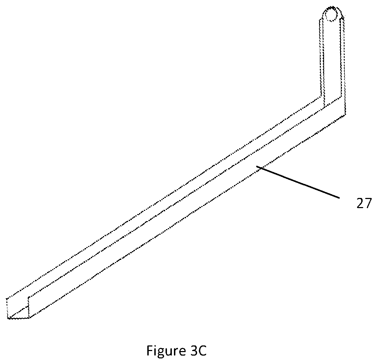

L'évaporateur comprend une pluralité de grilles 26 (voir figure 3B) et un canal de réception 27 (voir figure 3C) de liquide des grilles 26. Les grilles 26 sont disposées verticalement dans l'ensemble évaporateur/absorbeur 4 dans des plans parallèles espacés transversalement. Chaque grille 26 s'étend d'un bord d'un distributeur à un autre bord du distributeur opposé. Chaque grille 26 est engagée dans le canal de réception 27 et fixé en son milieu par des points de soudures. Dans cet exemple, le tissage des grilles de l'eau est de 14/100.200 alors que le tissage des grilles du bromure de lithium est de 25/118.114.

Chaque canal de réception 27 de l'ensemble évaporateur/absorbeur 4 permet la récupération sélective des liquides par gravité.

La molécule d'eau étant plus fine que celle du bromure de lithium, les grilles 26 de l'évaporateur sont plus fines que les grilles 26 de l'absorbeur permettant ainsi de retenir le liquide et laisser passer la vapeur.

A l'entrée de l'absorbeur et de l'évaporateur, une autre grille 7 et une encore autre grille 8 sont agencées à quelques millimètres des parois, par exemple 5 mm, de manière à éviter des éclaboussures de la solution riche ou de l'eau quand l'une, le bromure de lithium, entre dans l'absorbeur et l'autre, l'eau, entre dans l'évaporateur.

Pour produire environ 10 Kw/h de froid il faut évaporer, absorber, désorber et condenser environ 20 litres d'eau/heure. En faisant circuler entre l'absorbeur et le désorbeur 200 l/h de solution à 56% (environ 1620 gr/litre), pour produire 10 Kw/h de froid, il convient de soustraire environ 20 litres d'eau (20.000gr) aux (1620 gr x 200 litres- 324.000gr) de solution à 56% en circulation, donc désorber et condenser 20.000 gr d'eau.

Ainsi, à la sortie du désorbeur il y aura 324.000gr - 20.000gr soit 304.000gr pour 180 litres de solution.

C'est-à-dire une solution qui pèsera 304.000 gr/180 litres = 1688,80 gr/l soit environ à 59% de Bromure de Lithium.

C'est un résultat idéal.

Grâce à la machine de la présente invention, ce résultat est obtenu avec une température à l'absorbeur de 30° et une chauffe au désorbeur de 75°. Mais, si la solution est au-dessus de 35° à l'absorbeur, pour obtenir un bon résultat, la concentration en Bromure de Lithium devra être de 59%, c'est à dire environ 1690 gr x 200= 338.000 gr de solution et il faut désorber 20l (20.000gr) d'eau et descendre (338.000gr- 20.000gr)/180 litres c'est-à-dire une solution qui pèsera 1766,67gr/litre à environ 63% de concentration. Dans cette configuration, le seuil de la cristallisation est atteint.

La cristallisation est due à une concentration exagérée de Bromure de Lithium dans la solution car la machine désorbe plus qu'elle absorbe. Généralement, suite à une pression trop élevée dans l'évaporateur due à une fuite ou à la formation d'incondensables, la machine n'évapore plus, n'absorbe pas et continue de désorber jusqu'à la panne.

La machine de la présente invention résout ce problème. Nous avons observé que l'ampérage de la pompe de la solution augmentait de 2,5/10 quand la solution passait de 54% à 61% si bien que quand l'ampérage augmente au-delà de 2,5/10 la chauffe se bloque automatiquement et déclenche l'alarme évitant ainsi la cristallisation. A titre d'exemple, l'ampérage a une valeur de 1,5A à 54%, 1,6A à 58% et 1,75A à 60%.

Le contrôle des flux est important. L'eau et le Bromure de Lithium ne doivent jamais circuler à plus de 5km/h. A 54% la solution pèse environ 1600gr/litre, sa fluidité n'est pas idéale et à mesure que la concentration augmente la fluidité diminue et à 65% c'est la cristallisation. Ainsi, pour éviter la cristallisation, un débit d'environ 1500 l/h d'eau des tubes de 1/2" (12,7mm diamètre int.) suffisent. Avec le même débit pour la solution il sera nécessaire d'utiliser des tubes de 3/4" (19,5mm diamètre int).

La machine de la présente invention est agencée pour fonctionner avec une énergie solaire tout comme avec un réseau électrique standard. Son fonctionnement est simplifié dans la mesure où toutes les électrovannes sont supprimées grâce à l'utilisation de siphons.

Grâce à la machine de la présente invention, il est possible de produire un froid intense avec de l'eau chauffée sans la porter à ébullition, c'est-à-dire à partir d'une température avoisinant 60° ce qui facilite notamment le fonctionnement de la machine avec une énergie solaire.

## Revendications

1. Machine de refroidissement par absorption comportant :
- Un ensemble désorbeur / condenseur (1) comportant :
- Un désorbeur (2) de fluide réfrigérant et de fluide absorbant par séparation d'un flux mixte ;
- Un condenseur (3) de fluide réfrigérant raccordé au désorbeur (2) ;
- Un ensemble évaporateur/absorbeur (4), l'absorbeur (5) de fluide réfrigérant étant agencé pour absorber le fluide réfrigérant évaporé provenant de l'évaporateur (6), l'absorbeur (5) étant raccordé au condenseur (3) par une conduite d'alimentation en fluide absorbant et par une conduite d'évacuation de fluide mixte,
- Une première pompe (P1) agencée pour récupérer une solution de l'absorbeur (5) et la faire passer dans un premier échangeur (ECH1) de la machine de refroidissement où la solution se refroidit avant d'être dirigée vers des grilles (7) de l'absorbeur (5),
- Une deuxième pompe (P2) agencée pour récupérer le fluide réfrigérant de l'évaporateur (6) et le faire passer dans un deuxième échangeur (ECH2) où il réfrigère ledit fluide réfrigérant, avant de le diriger vers des grilles (8) de l'évaporateur (6),
- Une troisième pompe (P3) agencée pour récupérer une solution appauvrie de l'absorbeur (5) et la faire passer dans un troisième échangeur (ECH3) dans lequel la solution pauvre se réchauffe avant d'être dirigée vers un quatrième échangeur (ECH4) où la solution pauvre continue de se réchauffer avant d'être dirigée vers le désorbeur (2),
- Une carte électronique (9) agencée pour contrôler l'ampérage des pompes (P1, P2, P3) et couper la chauffe si l'ampérage atteint un seuil critique, typiquement 1,8A,
Dans laquelle le premier échangeur (ECH1) est agencé entre la première pompe (P1) et les grilles (7) de l'absorbeur (5) et configuré de sorte à former un siphon pour le fluide absorbant, empêchant ainsi le passage de l'air.

2. Machine de refroidissement selon la revendication 1, dans laquelle les première, deuxième et troisième pompe (P1, P2, P3) sont des pompes à entrainement magnétique et dont la troisième pompe (P3) est une pompe à entrainement magnétique à engrenage.

3. Machine de refroidissement selon la revendication 1 ou 2, dans laquelle l'ensemble désorbeur/condenseur (1) comporte deux plaques de désorption (10, 11) superposées et inclinées l'une par rapport à l'autre, typiquement environ 4% de pente, la superficie d'écoulement de canaux internes des deux plaques (10, 11) étant légèrement supérieure à la superficie d'un raccord d'entrée des plaques (10, 11) permettant le passage d'un fluide, une plaque antiéclaboussures (12) comportant des lamelles plates et parallèles les unes par rapport aux autres, les lamelles étant fixées entre elles par de longues lames agencées de part et d'autre de chaque lamelle de manière à laisser passer la vapeur mais arrêter les gouttelettes de la solution absorbante.

4. Machine de refroidissement selon l'une des revendications précédentes, dans laquelle l'ensemble désorbeur/condenseur (1) comporte une plaque de condensation verticale (13) dont une entrée d'eau de refroidissement est positionnée plus bas qu'une sortie d'eau de refroidissement, la superficie d'écoulement des canaux internes du condenseur étant légèrement supérieure à la superficie d'un raccord d'entrée.

5. Machine de refroidissement selon l'une des revendications précédentes, dans laquelle l'ensemble évaporateur/absorbeur (4) est raccordé à un circuit de circulation d'un mélange binaire comportant un premier fluide frigorigène et un second fluide absorbant, le fluide frigorigène étant évaporé dans une partie évaporateur de l'ensemble évaporateur/absorbeur (4) puis absorbé dans une partie absorbeur de l'ensemble évaporateur/absorbeur (4) par le mélange riche en fluide absorbant.

6. Machine de refroidissement selon la revendication 5, dans laquelle l'ensemble évaporateur/absorbeur (4) comprend deux tubes distributeurs (14, 15) en vis à vis formant des organes d'évaporateur (6) et d'absorbeur (5), des diffuseurs du fluide frigorigène (16) et des diffuseurs du mélange riche en fluide absorbant (17), chaque diffuseur du fluide frigorigène étant disposé en alternance avec un diffuseur du mélange riche en fluide absorbant.

7. Machine de refroidissement selon l'une des revendications précédentes, dans laquelle le fluide réfrigérant est de l'eau et le fluide absorbant est du bromure de lithium.

8. Machine de refroidissement selon l'une des revendications précédentes, dans laquelle l'évaporateur (6) comporte une pluralité de grilles (26) disposées verticalement dans l'ensemble évaporateur/absorbeur (4) dans des plans parallèles espacés transversalement.

9. Machine de refroidissement selon la revendication 8, dans laquelle chaque grille (26) est engagée dans un canal de réception (27) fixé en son milieu par des points de soudures, chaque canal de réception (27) est agencé pour récupérer les liquides par gravité.

10. Machine de refroidissement selon la revendication 8 ou 9, dans laquelle les grilles (26) de l'évaporateur sont plus fines que les grilles (26) de l'absorbeur permettant ainsi de retenir le liquide et laisser passer la vapeur, typiquement un tissage de 14/100.200 pour les grilles de l'évaporateur, et un tissage de 25/118.114 pour les grilles de l'absorbeur.

11. Machine de refroidissement selon l'une des revendications 8 à 10, dans laquelle à l'entrée de l'absorbeur et de l'évaporateur, une autre grille (7) et une encore autre grille (8) sont agencées à quelques millimètres des parois, transversalement aux grilles (26) de l'évaporateur et de l'absorbeur, de manière à éviter des éclaboussures des solutions quand l'une entre dans l'absorbeur et l'autre entre dans l'évaporateur.

## Patentansprüche

1. Absorptionskältemaschine, umfassend:
- eine Desorptions-/Kondensationseinheit (1), umfassend:
- eine Desorptionseinrichtung (2) für Kühlflüssigkeit und Absorptionsfluid durch Abscheiden eines gemischten Stroms;
- eine mit der Desorptionseinrichtung (2) verbundene Kühlflüssigkeitskondensationseinrichtung (3);
- eine Verdampfungs-/Absorptionseinheit (4), wobei die Kühlflüssigkeitsabsorptionseinrichtung (5) zum Absorbieren der verdampften Kühlflüssigkeit, die aus der Verdampfungseinrichtung (6) stammt, angeordnet ist, wobei die Absorptionseinrichtung (5) durch eine Zuleitung für das Absorptionsfluid und durch eine Ableitung für das gemischte Fluid mit der Kondensationseinrichtung (3) verbunden ist,
- eine erste Pumpe (P1), die zum Rückgewinnen einer Lösung aus der Absorptionseinrichtung (5) und deren Passierenlassen in einen ersten Austauscher (ECH1) der Kältemaschine angeordnet ist, in der die Lösung abkühlt, bevor sie zu den Gittern (7) der Absorptionseinrichtung (5) geleitet wird,
- eine zweite Pumpe (P2), die zum Rückgewinnen der Kühlflüssigkeit aus der Verdampfungseinrichtung (6) und deren Passierenlassen in einen zweiten Austauscher (ECH2) angeordnet ist, in dem die Kühlflüssigkeit abgekühlt wird, bevor sie zu den Gittern (8) der Verdampfungseinrichtung (6) geleitet wird,
- eine dritte Pumpe (P3), die zum Rückgewinnen einer abgereicherten Lösung aus der Absorptionseinrichtung (5) und deren Passierenlassen in einen dritten Austauscher (ECH3) angeordnet ist, wobei die arme Lösung erwärmt wird, bevor sie zu einem vierten Austauscher (ECH4) geleitet wird, in dem die arme Lösung weiter erwärmt wird, bevor sie zu der Desorptionseinrichtung (2) geleitet wird,
- eine Leiterplatte (9), die zum Steuern der Stromstärke der Pumpen (P1, P2, P3) und Abschalten der Heizung angeordnet ist, falls die Stromstärke einen kritischen Schwellenwert, typischerweise von 1,8 A, erreicht,
wobei der erste Austauscher (ECH1) zwischen der ersten Pumpe (P1) und den Gittern (7) der Absorptionseinrichtung (5) angeordnet und konfiguriert ist, um einen Siphon für das Absorptionsfluid auszubilden, wobei so der Durchtritt von Luft verhindert wird.

2. Kältemaschine nach Anspruch 1, wobei die erste, die zweite und die dritte Pumpe (P1, P2, P3) magnetisch angetriebene Pumpen sind und von denen die dritte Pumpe (P3) eine magnetisch angetriebene Zahnradpumpe ist.

3. Kältemaschine nach Anspruch 1 oder 2, wobei die Desorptionseinrichtungs-/Kondensationseinheit (1) zwei übereinander gelagerte und zueinander, typischerweise um ungefähr 4 % Steigung, geneigte Desorptionsplatten (10, 11), wobei die Strömungsfläche der inneren Kanäle der zwei Platten (10, 11) etwas größer als die Fläche eines Einlassanschlusses der Platten (10, 11) ist, der den Durchgang eines Fluids ermöglicht, eine Spritzschutzplatte (12) umfasst, umfassend flache und parallel zueinander verlaufende Lamellen, wobei die Lamellen durch lange Blätter aneinander befestigt sind, die auf beiden Seiten jeder Lamelle angeordnet sind, um den Dampf durchzulassen, die Tröpfchen der Absorptionslösung jedoch aufzuhalten.

4. Kältemaschine nach einem der vorstehenden Ansprüche, wobei die Desorptions-/Kondensationseinheit (1) eine vertikale Kondensationsplatte (13) umfasst, deren Kühlwassereinlass tiefer als ein Kühlwasserauslass positioniert ist, wobei die Strömungsfläche der inneren Kanäle der Kondensationseinrichtung etwas größer als die Fläche eines Einlassanschlusses ist.

5. Kältemaschine nach einem der vorstehenden Ansprüche, wobei die Verdampfungs-/Absorptionseinheit (4) an einem Zirkulationskreislauf eines binären Gemischs, umfassend ein erstes Kältemittel und ein zweites Absorptionsfluid, angeschlossen ist, wobei das Kältemittel in einem Verdampfungsteil der Verdampfungs-/Absorptionseinheit (4) verdampft, dann in einem Absorptionsteil der Verdampfungs-/Absorptionseinheit (4) durch das mit Absorptionsfluid angereicherte Gemisch absorbiert wird.

6. Kältemaschine nach Anspruch 5, wobei die Verdampfungs-/Absorptionseinheit (4) zwei einander gegenüberliegende Verteilerrohre (14, 15), die Elemente der Verdampfungseinrichtung (6) und der Absorptionseinrichtung (5) ausbilden, Diffusoren für das Kältemittel (16) und Diffusoren für das mit Absorptionsfluid angereicherte Gemisch (17) aufweist, wobei jeder Diffusor für das Kältemittel abwechselnd mit einem Diffusor für das mit Absorptionsfluid angereicherte Gemisch eingerichtet ist.

7. Kältemaschine nach einem der vorstehenden Ansprüche, wobei die Kühlflüssigkeit Wasser ist und das Absorptionsfluid Lithiumbromid ist.

8. Kältemaschine nach einem der vorstehenden Ansprüche, wobei die Verdampfungseinrichtung (6) eine Vielzahl von Gittern (26) umfasst, die in der Verdampfungs-/Absorptionseinheit (4) vertikal in quer beabstandeten, parallelen Ebenen eingerichtet sind.

9. Kältemaschine nach Anspruch 8, wobei jedes Gitter (26) in einen Aufnahmekanal (27) eingreift, der in seiner Mitte durch Schweißpunkte befestigt ist, wobei jeder Aufnahmekanal (27) angeordnet ist, um die Flüssigkeiten durch Schwerkraft zurückzugewinnen.

10. Kältemaschine nach Anspruch 8 oder 9, wobei die Gitter (26) der Verdampfungseinrichtung feiner als die Gitter (26) der Absorptionseinrichtung sind, typischerweise eine Webart von 14/100.200 für die Gitter der Verdampfungseinrichtung und eine Webart von 25/118.114 für die Gitter der Absorptionseinrichtung, wobei so die Flüssigkeit zurückgehalten und der Dampf durchgelassen werden kann.

11. Kältemaschine nach einem der Ansprüche 8 bis 10, wobei an dem Eingang der Absorptionseinrichtung und der Verdampfungseinrichtung ein weiteres Gitter (7) und noch ein weiteres Gitter (8) einige Millimeter von den Wänden entfernt, quer zu den Gittern (26) der Verdampfungseinrichtung und der Absorptionseinrichtung angeordnet sind, um ein Spritzen der Lösungen zu vermeiden, wenn die eine in die Absorptionseinrichtung und die andere in die Verdampfungseinrichtung eintritt.

## Claims

1. Absorption cooling machine comprising:
- a desorber/condenser assembly (1) comprising:
- a refrigerant and absorbent fluid desorber (2) by separation of a mixed flow;
- a refrigerant condenser (3) connected to the desorber (2);
- an evaporator/absorber assembly (4), the refrigerant absorber (5) being arranged to absorb the evaporated refrigerant from the evaporator (6), the absorber (5) being connected to the condenser (3) by an absorbent fluid supply pipe and a mixed fluid discharge pipe,
- a first pump (P1) arranged to recover a solution from the absorber (5) and pass it through a first exchanger (ECH1) of the cooling machine where the solution is cooled before being directed toward grilles (7) of the absorber (5),
- a second pump (P2) arranged to recover the refrigerant from the evaporator (6) and pass it through a second exchanger (ECH2) where it cools said refrigerant, before directing it toward grilles (8) of the evaporator (6),
- a third pump (P3) arranged to recover a weakened solution from the absorber (5) and pass it through a third exchanger (ECH3) in which the weak solution is heated before being directed toward a fourth exchanger (ECH4) where the weak solution continues to be heated before being directed toward the desorber (2),
- an electronic board (9) arranged to control the amperage of the pumps (P1, P2, P3) and to stop the heating if the amperage reaches a critical threshold, typically 1.8A,
wherein the first exchanger (ECH1) is arranged between the first pump (P1) and the grilles (7) of the absorber (5) and configured to form a siphon for the absorbent fluid, thereby preventing the passage of air.

2. Cooling machine according to claim 1, wherein the first, second and third pump (P1, P2, P3) are magnetic drive pumps and of which the third pump (P3) is a magnetic drive gear pump.

3. Cooling machine according to claim 1 or 2, wherein the desorber/condenser assembly (1) comprises two desorber plates (10, 11) superposed and inclined with respect to one another, typically with a slope of about 4%, the flow area of internal channels of the two plates (10, 11) being slightly greater than the area of an inlet connection of the plates (10, 11) allowing the passage of a fluid, an anti-splash plate (12) comprising flat slats which are parallel to one another, the slats being secured to one another by long strips arranged on either side of each slat so as to let vapor through but to stop droplets of the absorbent solution.

4. Cooling machine according to one of the preceding claims, wherein the desorber/condenser assembly (1) comprises a vertical condensation plate (13), a cooling water inlet of which is positioned lower than a cooling water outlet, the flow area of the internal channels of the condenser being slightly greater than the area of an inlet connection.

5. Cooling machine according to one of the preceding claims, wherein the evaporator/absorber assembly (4) is connected to a circuit for circulating a binary mixture comprising a first refrigerating fluid and a second absorbent fluid, the refrigerating fluid being evaporated in an evaporator part of the evaporator/absorber assembly (4) and then absorbed in an absorber part of the evaporator/absorber assembly (4) by the mixture which is rich in absorbent fluid.

6. Cooling machine according to claim 5, wherein the evaporator/absorber assembly (4) comprises two distributor tubes (14, 15) facing each other forming evaporator (6) and absorber (5) members, refrigerating fluid diffusers (16) and diffusers (17) of the mixture rich in absorbent fluid, each refrigerating fluid diffuser being arranged alternately with a diffuser of the mixture rich in absorbent fluid.

7. Cooling machine according to one of the preceding claims, wherein the refrigerant is water and the absorbent fluid is lithium bromide.

8. Cooling machine according to one of the preceding claims, wherein the evaporator (6) comprises a plurality of grilles (26) arranged vertically in the evaporator/absorber assembly (4) in transversely spaced parallel planes.

9. Cooling machine according to claim 8, wherein each grille (26) is engaged in a receiving channel (27) secured in the middle thereof by welding points, each receiving channel (27) is arranged to recover the liquids by gravity.

10. Cooling machine according to claim 8 or 9, wherein the evaporator grilles (26) are finer than the absorber grilles (26), thus allowing liquid to be retained and vapor to pass through, typically a mesh of 14/100.200 for the evaporator grilles, and a mesh of 25/118.114 for the absorber grilles.

11. Cooling machine according to one of claims 8 to 10, wherein at the inlet of the absorber and of the evaporator, a further grille (7) and a still further grille (8) are arranged a few millimeters from the walls, transversely to the grilles (26) of the evaporator and of the absorber, so as to prevent splashing of the solutions when one enters the absorber and the other enters the evaporator.
